# EUROPEAN PATENT SPECIFICATION

(11) **EP 2 429 221 B1**
(45) Date of publication and mention of the grant of the patent: **07.11.2018**
(21) Application number: 09844278.3
(22) Date of filing: 01.09.2009
(51) Int. Cl.: H04L 12/58, H04W 4/12

(54) **METHOD AND SYSTEM FOR SENDING LARGE MESSAGE MODE CONVERGED IP MESSAGING MESSAGE TO GROUP**
VERFAHREN UND SYSTEM ZUM SENDEN EINER KONVERGIERTEN IP-MESSAGING-NACHRICHT DES GROSSNACHRICHTENMODUS ZUR GRUPPE
PROCÉDÉ ET SYSTÈME PERMETTANT D'ENVOYER UN LONG MESSAGE DE MESSAGERIE CONVERGENTE SUR IP EN MODE MESSAGE À UN GROUPE

(30) Priority: 05.05.2009 CN 200910139040
(43) Date of publication of application: 14.03.2012
(73) Proprietor: ZTE Corporation, Shenzhen, Guangdong 518057 (CN)
(72) Inventor: GHAZANFAR, Ali, Guangdong 518057 (CN); HUANG, Zheng, Guangdong 518057 (CN)
(74) Representative: Novagraaf Technologies
(86) International application number: PCT/CN2009/073671
(87) International publication number: WO 2010/127526

(56) References cited:
- WO-A1-2008/060084
- CN-A- 101 212 719
- US-A1- 2008 219 283
- OMA Open Mobile Alliance: "Instant Messaging using SIMPLE Architecture Candidate Version 1.0 03 Sep 2008 Open Mobile Alliance OMA-AD-SIMPLE_IM-V1_0-20080903-C", , 3 September 2008 (2008-09-03), XP002687406, Retrieved from the Internet: URL:http://member.openmobilealliance.org/f tp/public_documents/COM/IM/Permanent_docum ents/OMA-AD-SIMPLE_IM-V1_0-20080903-C.zip [retrieved on 2012-11-16]
- Mark Wuthnow, Matthew Stafford, Jerry Shih: "IMS A New Model for Blending Applications", 28 July 2009 (2009-07-28), Auerbach Publications, XP002687407, ISBN: 978-1-4200-9285-1 pages 231-238,
- "Converged IP Messaging Requirements Candidate Version 1.0 ? 06 Nov 2007", INTERNET CITATION, 6 November 2007 (2007-11-06), XP002475847, Retrieved from the Internet: URL:http://member.openmobilealliance.org/f tp/Public_documents/REQ/REQ-CPM/PERMANENT_ DOCUMENTS/OMA-RD_CPM-V1_0-20071106-C.ZIP [retrieved on 2008-04-10]
- CAMPBELL B ET AL: "The Message Session Relay Protocol (MSRP); rfc4975.txt", 20070901, 1 September 2007 (2007-09-01), XP015052511, ISSN: 0000-0003
- OPEN MOBILE ALLIANCE: 'Converged IP Messaging Requirements' OMA-RD-CPM-V1_0-20090310-C 10 March 2009, pages 1 - 74, XP064064785

## Description

### Technical Field of the Invention

The present invention relates to the technical field of mobile communications, and in particular to a method for and a system sending a converged IP messaging (CPM) to a group, and more specifically to a method and a system for transmitting a large message mode CPM message to a group.

### Background of the Invention

The CPM was proposed by the open mobile architecture (OMA) in 2005 to realize the intercommunication of multiple message services, to provide uniform message services, and to perfect consistent and convenient message service experience. The CPM merges multiple kinds of existing message services, including instant messaging (IM), push-to-talk over cellular (POC), mobile E-mail (MEM), short messaging service (SMS), and multimedia messaging service (MMS), etc.

The OMA is currently formulating a CPM V1.0 standard. The main service forms of CPM include: page-mode-based CPM message, session-mode-based large message mode CPM message, and other session-based CPM session services. Before using these services, a user needs to register on and log in a CPM system, which is generally known as "online".

The CPM clients and the CPM enablers of a receiver and a sender use a session initiation protocol (SIP) message to transmit a page-mode message. But, when the sender terminal sends a large message mode CPM message, an SIP message cannot be used to carry such a large message mode CPM message, if the size of the large message mode CPM message is beyond a certain limit (e.g. over 1300 bytes).

CPM service supports a pre-defined group (CPM pre-defined group) and a temporary group (CPM Ad-hoc group). A CPM user can send a CPM paging message to the CPM Ad-hoc group or CPM pre-defined group. However, when the paging message's size is above a certain limit, it cannot be carried by the SIP message.

No technical solution has been proposed in the prior arts to solve the problem of sending a large message mode CPM message to a CPM Ad-hoc group or a CPM pre-defined group.

The document OMA Open Mobile Alliance: "Instant Messaging using SIMPLE Architecture Candidate Version 1.0 03 Sep 2008 Open Mobile Alliance OMA-AD-SIMPLE_IM-V1_0-20080903-C" discloses a related method for messaging using the SIMPLE architecture.

### Summary of the invention

According to the invention there is provided a method according claim 1 and a system according to claim 2.

Other features and advantages of the present invention will be described in the following description, and partly become obvious from the description, or may be learned by implementing the invention. The objects and other advantages of the present invention can be realized and obtained from the structures especially indicated in the specification, claims and the drawings.

### Brief Description of the Drawings

As one part of the specification, the drawings illustrated here provide a further understanding of the present invention. The exemplary embodiments and the description thereof are used to explain the present invention without unduly limiting the scope of the present invention. In the drawings:
Fig. 1 is a flowchart of a method for sending a large message mode CPM message to a group in the case of an available CPM receiver in a group according to an embodiment of the present invention;
Fig. 2 is a schematic diagram illustrating the process of establishing a media link between a sender CPM client and a receiver CPM client in the case of an available CPM receiver in a group according to an embodiment of the present invention;
Fig. 3 is a flowchart of a method for sending of a large message mode CPM message from a sender CPM client to a receiver CPM client in the case of an available CPM receiver in a group according to an embodiment of the present invention;
Fig. 4 is a block diagram of a media link for the transmission of a large message mode CPM message from a sender CPM client to a receiver CPM client in the case of an available CPM receiver in a group according to an embodiment of the present invention;
Fig. 5 is a signal flowchart in the case of an available CPM receiver in a group according to an embodiment of the present invention.
Fig. 6 is a flowchart of the signaling and media control of the controlling function entity of a system for transmitting a large message mode CPM message to a group according to an embodiment of the present invention;

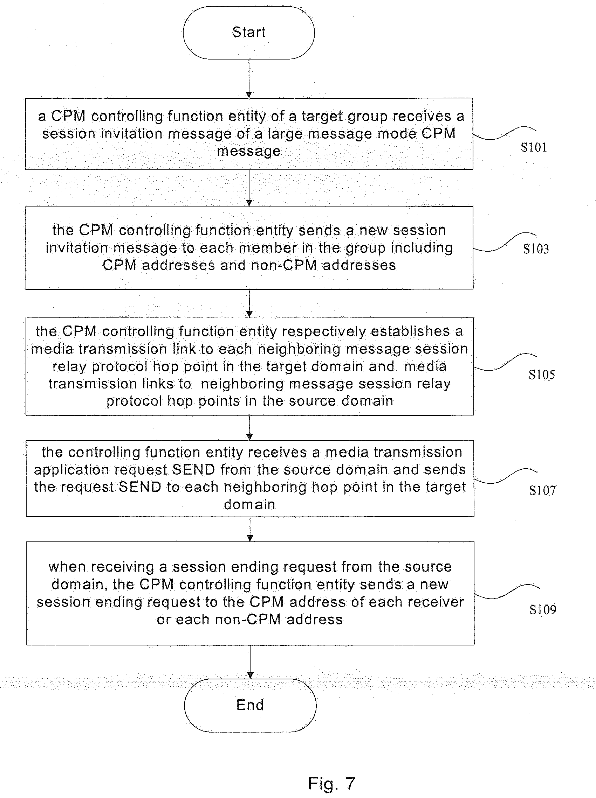

Fig. 7 is a schematic diagram illustrating the function of a controlling function entity for transmitting a large message mode CPM message to a group according to an embodiment of the present invention.

### Detailed Description of Embodiments

### Functional Overview

A large message mode CPM message occupies a large space, and therefore cannot be directly carried by an SIP message. The transmission mode of the large message mode CPM message is different from that of a page-mode CPM message in that the transmission path of the large message mode CPM message is divided into a signaling path and a media path, that is, signaling is transmitted via the signaling path and media is transmitted via the media path. Thus, in the embodiments of the present invention, when sending a large message mode CPM message, a session is first established between a sender CPM client and a receiver CPM client by a session invitation message (INVITE) of the large message mode CPM message to complete a media negotiation, and then a transmission link between the sender CPM client and the receiver CPM client is established to transmit the message body of the large message mode CPM message, that is, the content of the large message mode CPM message, to the receiver CPM client using a message session relay protocol (MSRP).

When a large message mode CPM message is sent to a group, there can be several receiver addresses in the group. A receiver address may be a CPM address or a non-CPM address. The CPM address may be an available CPM address or a not-available CPM address. Therefore, in the embodiments of the present invention, a controlling function entity manages and controls groups in a centralized manner, acting as a temporary conference center, and also acts as a user agent client (UAC) and a user agent server (UAS) synchronously according to a B2BUA (back-to-back user agent) principle. That is, when receiving a request, the controlling function entity can make a response as a server, but can also generate a new request to learn which response should be made. After receiving a session invitation message, the controlling function entity sends the session invitation message to each receiver (CPM addresses and non-CPM addresses) in the group so as to establish a signaling and media transmission path with each receiver client (an inter-working function entity for a non-CPM address or a not-available CPM address) in a target domain. Therefore, the transmission of the large message mode CPM message is achieved between the sender client and each receiver client in the group.

It should be noted that the large message mode CPM message defined in the embodiments of the present invention refers to a CPM message with a size beyond a predetermined limit (e.g. 1300 bytes) which is defined in CPM standards regulated by the OMA. Such a message cannot be directly carried by an SIP message.

The embodiments of the present invention and the features thereof can be combined with each other, if no conflict is caused.

The preferred embodiments of the invention are illustrated below in combination with the drawings, and it should be appreciated that the preferred embodiments herein are only for illustrating and explaining the invention but not for limiting the invention.

According to an embodiment of the present invention, firstly a method for sending a large message mode CPM message to a target group is provided.

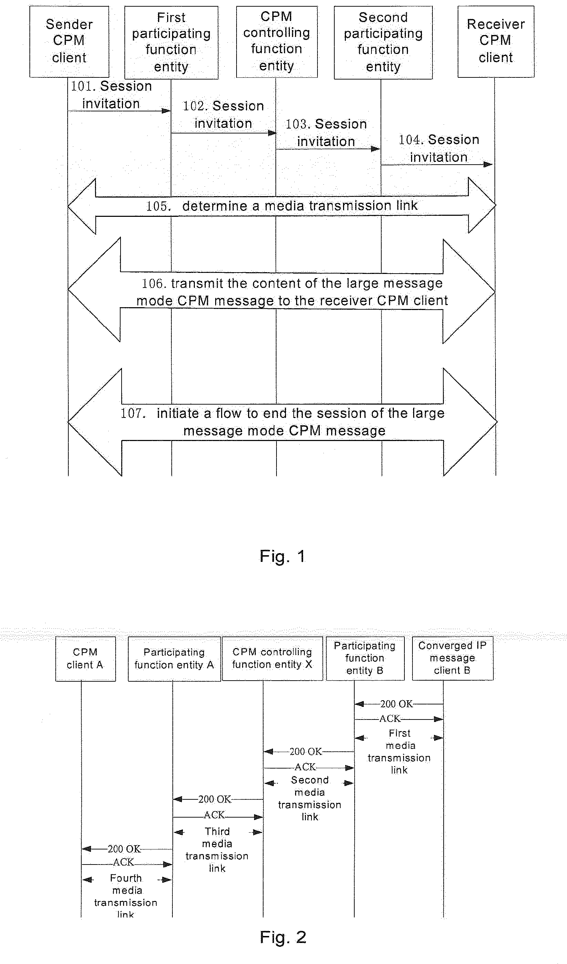

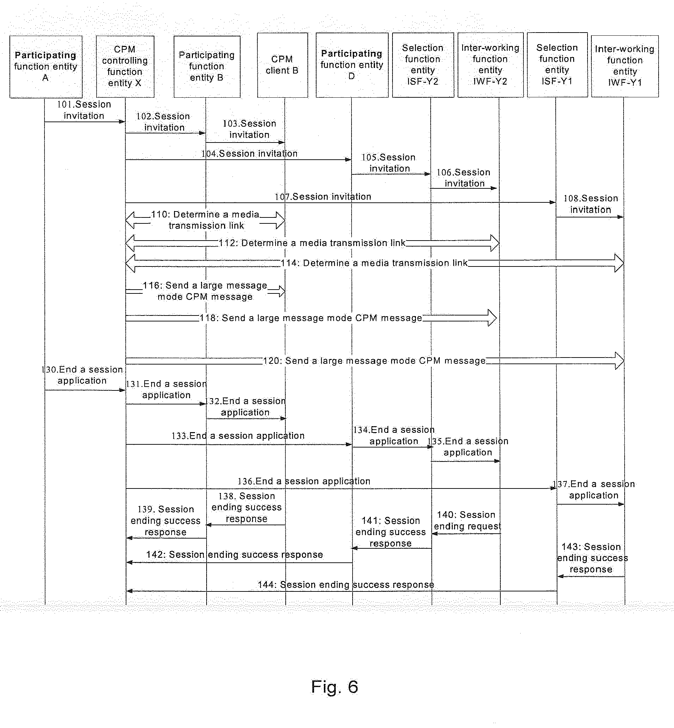

Fig. 1 is a flowchart of a method for transmitting a large message mode CPM message to a group in the case of an available CPM receiver in a group according to an embodiment of the present invention; Fig. 6 is a diagram illustrating the transmission of a large message mode CPM message to a group in general cases. For the sake of simplicity, SIP/IP core nodes are omitted in both Fig. 1 and Fig. 6, while a signaling transmission between every two function entities shown in the two figures is actually achieved through SIP/IP core network, and the omission does not constitute limitation to the present invention. As shown in Fig.1 and Fig. 6, according to the embodiment of the present invention, the method for transmitting a large message mode CPM message to a group comprises the followings steps (S101-S107):
Steps 101-104: a sender CPM client sends a session invitation message of a large message mode CPM message to a pre-defined group or a temporary group. A CPM controlling function entity receives the session invitation message, and obtains receiver addresses of the pre-defined group or the temporary group according to the session invitation message, that is, obtaining a group member list by analyzing the MIME <resource-lists> carried by the message body of the session invitation message if the receiver is the temporary group, or obtaining the addresses of the group members from a document server [OMA-XDM-Shared-Group] if the receiver address is the pre-defined group. The CPM controlling function entity sends the session invitation message to each receiver respectively. And at last, a CPM client or an inter-working function entity receives the session invitation message;
   the invitation messages in Steps 101-104 may carry different call-IDs, or the invitation messages may be different in Steps 101-104. In order to simplify description and avoid ambiguity, the difference in the conceptions of SIP message on the same transmission path using the same method, but in different sessions, is not emphasized in some expressions of the present invention. The difference may be understood based on the context of the present invention if no specific explanation is given;
Step 105: for the address of an available CPM receiver in the group, the receiver CPM client receives the session invitation message and negotiates with the sender CPM client to determine a media transmission link between the sender CPM client and the receiver CPM client, or this step may be as follows: after receiving the session invitation message, the receiver CPM client negotiates with a controlling function (CF) entity to determine a transmission link between the receiver and the controlling function entity, and the controlling function entity negotiates with the sender client to determine a transmission link to the sender CPM client;
   for a not-available CPM address in the group or a non-CPM address in the group, the inter-working function entity receives the session invitation message and determines a media transmission link between the controlling function entity and the sender client on one hand, and a media transmission link between the controlling function entity and the inter-working function entity on the other hand;
Step S106: the sender CPM client sends the content of the large message mode CPM message to the receiver CPM client or a non-CPM system via the media transmission link; and
Step 107: a flow to end the session of the large message mode CPM message is initiated by the sender CPM client, the controlling function entity, the receiver CPM client, or the inter-working function entity.

The steps above are described below in detail:

### (1) Steps S101-S104

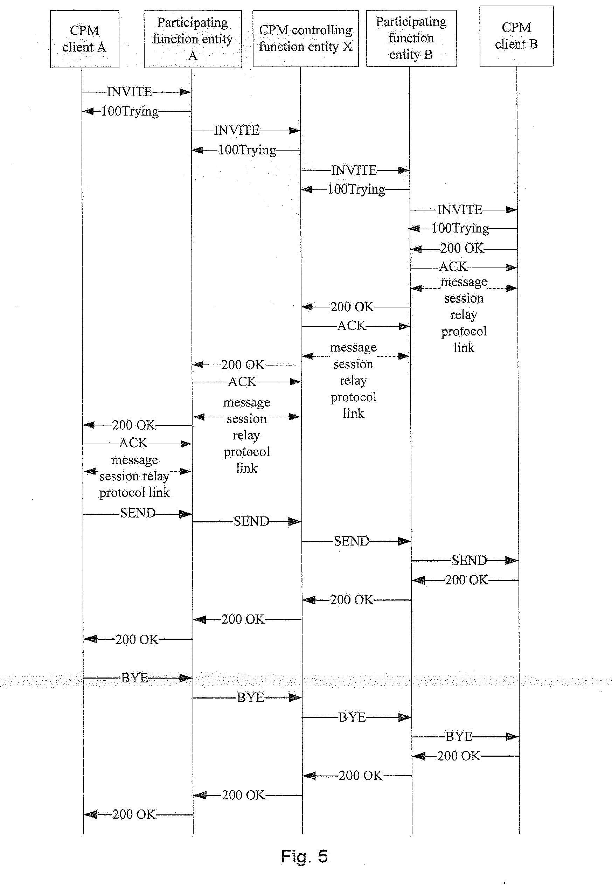

For the sake of simplicity, SIP/IP core nodes are omitted in both Fig. 1 and Fig. 6. The signaling transmission between every two function entities shown in the two figures is actually achieved through SIP/IP core network, and the omission constitutes no limitation to the present invention. In a specific implementation process, during the process in which the sender CPM client sends the session invitation message to the receiver CPM client, as shown in Fig. 5, after receiving the session invitation message, each network element can return a response message (100 Trying) to the network element sending the session invitation message.

### (2) Step S105

In a specific implementation process, the media transmission link established between the sender CPM client and the receiver CPM client may be an MSRP protocol link, and specifically, the following sectionalized MSRP media transmission links are established for an available CPM receiver address in the group:
a first media transmission link between the receiver CPM client and a second participating function entity; if there exist multiple receiver addresses belonging to the second participating function entity in the group, then each receiver CPM client establishes a media transmission link with the second participating function entity;
a second media transmission link between the second participating function entity and the controlling function entity; if there exist multiple receiver addresses belonging to the second participating function entity in the group, then the second participating function entity establishes multiple media transmission links with the controlling function entity;
a third media transmission link between the controlling function entity and the first participating function entity; and
a fourth media transmission link between the first participating function entity and the sender CPM client.

The following sectionalized MSRP media transmission links are established for a not-available CPM address in the group:
a first media transmission link between the inter-working function entity and the second participating function entity;
a second media transmission link between the controlling function entity and the second participating function entity;
a third media transmission link between the controlling function entity and the first participating function entity; and
a fourth media transmission link between the first participating function entity and the sender CPM client.

The following sectionalized MSRP media transmission links are established for a non-CPM address in the group:
a first media transmission link between the inter-working function entity and the controlling function entity;
a third media transmission link between the controlling function entity and the first participating function entity;
and a fourth media transmission link between the first participating function entity and the sender CPM client.

Fig. 6 shows no illustration on a response message given by the controlling function entity for the session invitation message from the source terminal, namely the participating function entity A. The controlling function entity carries out a process according to the B2BUA principle and acts as a temporary conference center during the period of a large message mode session, which comprises the following solutions:
Solution 1: after receiving a session invitation message, on one hand, the controlling function entity carries out a group diverging process for the session invitation message, that is, obtaining each receiver address in the group and sending the session invitation message to each receiver in the group respectively, and on the other hand, returns a success response for the received session invitation message;
Solution 2: after receiving a session invitation message, the controlling function entity carries out a group diverging process for the session invitation message, and returns a success response for the session invitation message after receiving the first success response from a target domain;
Solution 3: after receiving a session invitation message, the controlling function entity carries out a group diverging process for the session invitation message and returns a success response for the session invitation message after receiving all success responses from a target domain.

### (3) Step S106

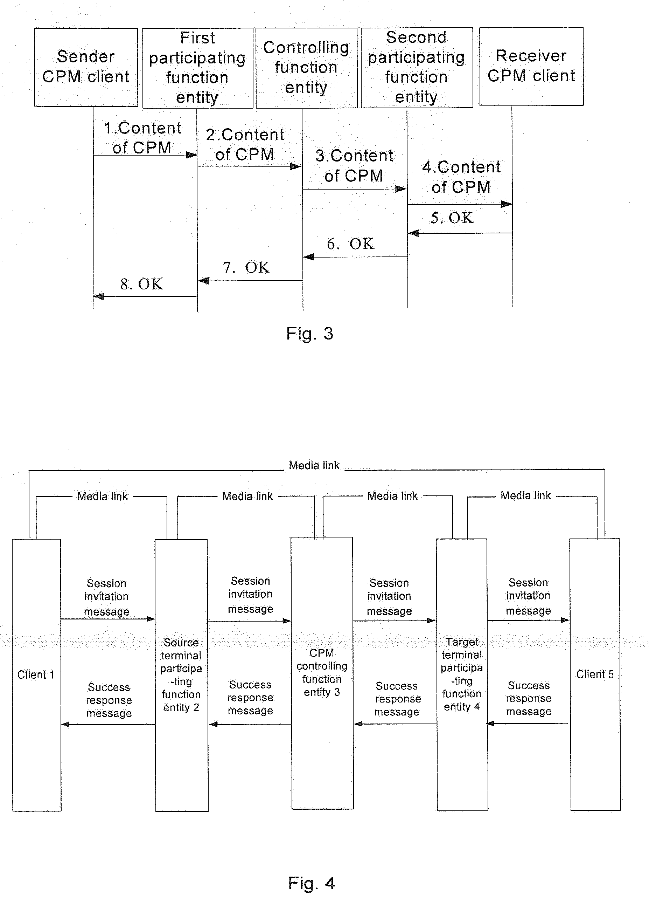

After determining a media transmission link between the sender CPM client and the receiver CPM client (or the inter-working function entity), the sender CPM client sends the message body of the large message mode CPM message (namely, the content of the large message mode CPM message) to the receiver CPM client (or the inter-working function entity) via the established media transmission link. Specifically, as shown in Fig. 3 and Fig. 6, the process of this step comprises the following steps:
Step1, the sender CPM client sends the content of the large message mode CPM message to the first participating function entity via the fourth media transmission link and sends a request MSRP SEND block by block according to the MSRP protocol;
Step 2: after receiving the request MSRP SEND, the first participating function entity sends the request MSRP SEND to the controlling function entity via the third media transmission link;
Step 3: after receiving the request MSRP SEND, the controlling function entity sends the MSRP SEND to the second participating function entity, sending the request MSRP SEND to each receiver address respectively if there are multiple receiver addresses belonging to the second participating function entity in the group, or sending the request MSRP SEND to the inter-working function entity via an established link if there is a non-CPM address in the group; and
Step 4: the second participating function entity sends the MSRP SEND to the receiver CPM client via the first media transmission link, or to the inter-working function entity via the first media transmission link if there is a not-available CPM user in the group.

### (4) Step S107

After sending the content of the large message mode CPM message to the receiver CPM client, the sender CPM client may initiate a session ending flow. Specifically, the session ending flow may be initiated by the sender CPM client, the controlling function entity, the receiver CPM client, or the inter-working function entity. The initiation of session ending flows by different network elements are described below.

### The initiation of a session ending flow by the sender CPM client

For the sake of simplicity, SIP/IP core nodes are omitted in both Fig. 1 and Fig. 6. The signaling transmission between every two function entities shown in the two figures is actually achieved through SIP/IP core network, and these omissions constitute no limitation to the present invention. Specifically, as shown in Fig. 5 and Fig. 6, the initiation of a session ending flow by the sender CPM client mainly comprises the following steps:
Step 1: the sender CPM client sends an indication message indicating the ending of the session of a large message mode CPM message, wherein the indication message is routed to the first participating function entity via SIP/IP core network;
Step 2: the first participating function entity receives and sends the indication message, wherein the indication message is routed to the CPM controlling function entity via the SIP/IP core network;
Step 3: the CPM controlling function entity receives the indication message and respectively sends the indication message to each receiver according to the receiver addresses in the group, wherein the message is routed to the second participating function entity (for a CPM address) or to a selection function entity (for a non-CPM address) via the SIP/IP core network;
Step 4: the second participating function entity receives and sends the indication message, wherein the indication message is routed to the receiver CPM client via the SIP/IP core network or to the inter-working function entity for the not-available CPM user;
Step 5: the receiver CPM client receives the indication message and sends a response message, wherein the response message is routed to the second participating function entity via the SIP/IP core network;
Step 6: the second participating function entity receives and sends the response message, wherein the response message is routed to the CPM controlling function entity via the SIP/IP core network;
Steps 3-6 illustrates the case of an available CPM receiver;
   for a not-available CPM address, the message indicating the ending of the session is transmitted via the following path: CF→ PF →ISF→ IWF, and a response is transmitted via a reverse path;
   for a non-CPM address, the message indicating the ending of the session is transmitted in the following path: CF→ ISF→ IWF, and a response is transmitted via a reverse path;
Step 7: the CPM controlling function entity sends a response message which is routed to the first participating function entity via the SIP/IP core network and sends only one session ending response message to the source domain in the case that multiple receivers are in the group; and
Step 8: the first participating function entity receives and sends the response message, wherein the response message is routed to the sender CPM client via the first SIP/IP core network.

The above is an embodiment of a session ending flow. The CPM controlling function entity may make a response to the source domain at the moment when the session ending request response is received, that is, the CPM controlling function entity makes a response in Step 3 in stead of Step 7.

### The initiation of a session ending flow by the receiver CPM client

The process of the receiver CPM client initiating a session ending flow is reverse to that initiated by the sender CPM client, and what differs is that if the receiver client sending a session ending request is not the only receiver participating in the current session, that is, there exists at least one other receiver client at this time, then after receiving the session ending request, the controlling function entity returns a session ending success response to the receiver client but does not send the session ending request to the source terminal.

### The initiation of a session ending flow by the controlling function entity of the receiver

The controlling function entity acts as a temporary conference center and may initiate a session ending flow for each member (specifically, an address associated with a member) in the group.

The method for transmitting a large message mode CPM message provided in the embodiments of the present invention may realize the transmission of a large message mode CPM message to receivers in a target group. Multiple receiver addresses are included in the target group, which may include available CPM addresses, not-available CPM addresses, and non-CPM addresses.

For a further understanding of the specific implementation of the technical solutions provided in the embodiments of the present invention, the specific embodiments are explained hereinafter in detail.

In the following embodiment, without loss of generality, it is assumed that the sender CPM client is CPM client A, the valid binding address of which is CPM Address A, the first participating function entity to which the sender belongs is Participating Function A, and the CPM clients of the available CPM receivers in the target group are CPM Client B and CPM Client C, the binding address of which are CPM Address B and CPM Address C respectively; the second participating function entities to which the available receivers belong are Participating Function B and Participating Function C; and the CPM controlling function entity with which the target group associates is CPM Controlling Function X. It is also assumed in this embodiment that there exists a non-CPM address in the group, which is assumed to be non-CPM address D, and the corresponding selection function entity and inter-working function entity are Inter-working Selection Function-Y1 and Inter-working Function-Y1. It is further assumed in this embodiment that there exists a non-available CPM Address D in the group, which belongs to Participating Function D, and the corresponding selection function entity and inter-working function entity are Inter-working Selection Function-Y2 and Inter-working Function-Y2.

The session ending flow is initiated by the CPM Client A in this embodiment.

Fig. 6 is a flowchart of the transmission of a large message mode CPM message to a target group by the CPM Client A according to this embodiment. As shown in Fig. 6, the transmission of a large message mode CPM message to a target group by the CPM Client A mainly comprises the following steps:
Step 1: the CPM Client A sends a session invitation message to a pre-defined group or a temporary group, wherein the session message is routed to Participating Function A via SIP/IP core network;
Step 2: the Participating Function A receives the session invitation message, generates and sends a session invitation message, wherein the session invitation message sent by the Participating Function A is routed to a CPM Controlling Function X via the SIP/IP core network;
Step 3: the CPM Controlling Function X receives the session invitation message, and sends the session invitation message according to receiver addresses: if the receiver is a temporary group, the CPM Controlling Function X sends the received session invitation message to each member according to a group member list (e.g. MIME <resource-lists>) carried in the message body of the session invitation message; or if the receiver is a pre-defined group, the CPM Controlling Function X obtains addresses of group members from a document server (e.g. [OMA-XDM-Shared-Group]) and send the session invitation message to each member. In this embodiment, the CPM Controlling Function X sends session invitation request messages to the CPM Address B, the CPM Address C and the non-CPM address D. The request messages are routed to the Participating Function B, the Participating Function C, the Participating Function D and the Inter-working Selection Function-Y1 respectively via the SIP/IP core network;
Step 4: the Participating Function B receives the session invitation message, generates and sends a session invitation message, wherein the session invitation message sent by the Participating Function B is routed to a CPM Client B via the SIP/IP core network;
Step 5: the Participating Function C receives the session invitation message, generates and sends a session invitation message, wherein the session invitation message sent by the Participating Function C is routed to the CPM Client C via the SIP/IP core network;
Step 6: the Inter-working Selection Function-Y1 receives and sends the session invitation message, wherein the session invitation message is routed to the Inter-working Function-Y1 via the SIP/IP core network;
Step 7: the CPM Client B receives the session invitation message and sends a success response, wherein the success response is routed to the Participating Function B via the SIP/IP core B;
Step 8: the Participating Function B receives the success response message, generates and sends a final acknowledgement message of the success response, wherein the acknowledgement message is routed to the CPM Client B via the SIP/IP core B;
Step 9: the CPM Client B receives the final acknowledgement message and establishes, according to the indication of SDP information, a first media transmission link (may be a TCP link) to a neighboring MSRP relay node, that is, to the Participating Function B in actual application;
   If TCP transmission links exist between the CPM Client B and the Participating Function B, one of the existing TCP transmission links may be selected as the media transmission link for transmitting large message mode CPM messages;
Step 10: the participating function B sends a success response message, wherein the success response message is routed to the CPM Controlling Function X via the SIP/IP core network;
Steps 8-10 are not in a strict time sequence, that is, the sending of the success response message SIP 200 OK and the SIP ACK by the Participating Function B does not follow a strict time sequence;
Step 11: the CPM Controlling Function X receives the success response message and sends a final acknowledgement message of the success response, wherein the acknowledgement message is routed to the Participating Function B via the SIP/IP core network;
Step 12: the Participating Function B receives the final acknowledgement message and establishes, according to the indication of SDP information, a second media transmission link (may be a TCP link) to a neighboring MSRP relay node, that is, to the Participating Function B in actual application;
   If TCP transmission links exist between the Participating Function B and the Controlling Function X currently, one of the existing TCP transmission links may be selected as the media transmission link for transmitting large message mode CPM message;
   the establishment processes of the media transmission links between the CPM Client C and the Participating Function C, and between the Participating Function C and the Controlling Function X are similar to that described in Steps 7-12, and thus no repeated description is given here;
Step 13: the CPM Controlling Function X sends a success response message, wherein the success response message is routed to the Participating Function A via the SIP/IP core network;
Step 14: the Participating Function A receives the success response message and sends a final acknowledgement message of the success response, wherein the acknowledgement message is routed to the CPM Controlling Function X via the SIP/IP core network;
Step 15: the CPM Controlling Function X receives the final acknowledgement message and establishes, according to the indication of SDP information, a third media transmission link (may be a TCP link) to a neighboring MSRP relay node, that is, to the CPM Participating Function A in actual application;
   similarly, an existing media transmission link between the Participating Function A and the CPM Controlling Function X may be selected;
Steps 11-15 are not in a strict time sequence, that is, the sending of the success response message SIP 200 OK and the SIP ACK by the CPM Controlling Function X does not follow a strict time sequence;
Step 16: the participating function A sends a success response message, wherein the success response message is routed to the CPM Client A via the SIP/IP core network;
Step 17: the CPM Client A sends a final acknowledgement message of the success response, wherein the acknowledgement message is routed to the Participating Function A via the SIP/IP core network;
Step 18: the Participating Function A receives the final acknowledgement message and establishes, according to the indication of SDP information, a fourth media transmission link (may be a TCP link) to a neighboring MSRP relay node, that is, to the CPM Client A in actual application;
   similarly, an existing media transmission link between the CPM Client A and the Participating Function A may be selected;
   in this solution, the whole signaling path and the whole transmission link respectively are divided into two parts in the aspect of Controlling function: a part in a source domain: CPM Client A <->Participating Function A<->Controlling Function X; and a part in a target domain: Controlling Function X<-> Participating Function B<->CPM Client B; Controlling Function X<-> Participating Function C<->CPM Client C; and Controlling Function X<-> Inter-working Selection Function-Y1<->Inter-working Function-Y1;
   for a non-CPM address in the group, the MSRP transmission link at the side of the target domain is established between the Inter-working Function-Y1 and the Controlling Function X;
   for a not-available CPM address in the group, the MSRP transmission links at the side of the target domain are established between the Inter-working Function-Y1 and the Participating Function-D, and between the Participating Function-D and the Controlling Function X;
Step 19: for an available CPM user, the CPM Client A sends the content of the large message mode CPM message (CPM Large Message Media) to the receiver CPM Client B and the receiver CPM Client C via the fourth, the third, the second and the first media transmission links in a hop-by-hop manner using the MSRP protocol;
   for a not-available CPM address in the group, the large message mode CPM message is transmitted, at the side of the target domain, via the transmission links between the Controlling Function X and the Participating Function-D, and between the Participating Function-D and the Inter-working Function-Y1, and finally transmitted to a non-CPM system;
   for a non-CPM system receiver address in the group, the large message mode CPM message is transmitted, at the side of the target domain, via the transmission link between the Controlling Function X and the Inter-working Function-Y1, and finally transmitted to a non-CPM system;
Step 20: the CPM Client A sends a session ending instruction message SIP BYE, wherein the message SIP BYE is routed to the Participating Function A via the SIP/IP core network;
Step 21: the Participating Function A receives and sends the session ending instruction message BYE, wherein the message BYE is routed to the CPM Controlling Function X via the SIP/IP core network;
Step 22: the Controlling Function X sends the session ending instruction message to each receiver address (CPM addresses and non-CPM addresses);
Step 22: the Controlling Function X sends a success response message of the BYE, wherein the success response message is routed to the Participating Function A via the SIP/IP core network;
Step 23: the participating function A receives the success response message of the BYE, wherein the success response message is routed to the CPM Client A via the SIP/IP core network;
Steps 22-23 show an example of the Controlling Function X giving a response of the BYE; alternatively, the Controlling Function X sends a success response of the BYE to the source domain after receiving a success response of the BYE (for example, the first BYE response message) from a receiver;
Step 23: the Participating Function B receives and sends the session ending instruction message SIP BYE, wherein the message SIP BYE is routed to the CPM Client B via the SIP/IP core network;
Step 24: the CPM Client B receives the session ending instruction message SIP BYE and sends a success response message of the BYE, SIP 200 OK, wherein the message SIP 200 OK is routed to the Participating Function B via the SIP/IP core network; and
Step 25: the Participating Function B receives and sends the session ending success response message SIP 200 OK, wherein the message SIP 200 OK is routed to the CPM Controlling Function X via the SIP/IP core network.

The ending flow of a session between the CPM Controlling Function X and the CPM Client C is similar to the Steps above.

According to an embodiment of the present invention, a system for sending a large message mode CPM message is provided, which is used for sending a large message mode CPM message to a target group.

As shown in diagrams, according to an embodiment of the present invention, the system for sending a large message mode CPM message comprises: a sender CPM client 1, a source terminal participating function entity 2, a CPM controlling function entity 3 of a target group, a target terminal participating function entity 4 and a receiver CPM client 5, wherein the sender CPM client is configured to send a session invitation message of a large message mode CPM message carrying session description parameters of session description protocol (SDP) for a negotiation, to receive a success response message SIP 200 OK of the session invitation message, to establish a media transmission link, and to send a media transmission request MSRP SEND via the established media transmission link; the source terminal participating function entity, that is, the participating function entity to which the sender belongs, is configured to receive and to send the session invitation message, to receive and to send the success response message SIP 200 OK, to establish a media transmission link, to receive the media transmission request MSRP SEND, and to send the media transmission request to a neighboring MSRP relay node; the CPM controlling function entity is configured to receive the session invitation message and to send the received session invitation message to each receiver address in the group, to receive and to send the success response message SIP 200 OK of the session invitation message, to establish a media transmission link, and to send the request MSRP SEND to each receiver address via the established media transmission links after receiving the request MSRP SEND; the target terminal participating function entity, that is, the participating function entity to which the receiver belongs, configured to receive and to send the session invitation message, to receive and to send the success response message SIP 200 OK of the session invitation message, to establish media transmission links, receiving the media transmission request MSRP SEND, and to send the media transmission request to neighboring MSRP relay nodes; and the receiver CPM client is configured to receive the session invitation message, to create and to make a response to the success response message SIP 200 OK of the session invitation message, to establish a media transmission link, and to receive the media transmission request MSRP SEND.

When receiving the session invitation message, the CPM controlling function entity acts as a conference center temporarily, and obtains a receiver address according to a group member list carried in the message body of the session invitation message if the receiver is a temporary group, or obtains a receiver address from a document server if the receiver is a pre-defined group.
function entity acts as a conference center temporarily, and obtains a receiver address according to a group member list carried in the message body of the session invitation message if the receiver is a temporary group, or obtains a receiver address from a document server if the receiver is a pre-defined group.

The receiver address refers to the address of a CPM receiver (CPM Address) or a non-CPM address. The CPM controlling function entity acts as a back-to-back user agent (B2BUA) when receiving the session invitation message, adds a characteristic parameter 'isfocus' in the response SIP 200 OK after receiving the response message SIP 200 OK, sends a final acknowledgement message SIP ACK after receiving the response message SIP 200 OK, determines links to neighboring nodes hops according to the information provided by the SDP after receiving the SIP ACK, and sends a received request BYE to each receiver address in the target group after receiving the request BYE from the sender.

As stated above, by means of the solution provided in the embodiments of the present invention, transmission links are established between a sender and available CPM receivers in a group by a session invitation message of a large message mode CPM message to send the content of the large message mode CPM message to each receiver in the target group. Therefore, the present invention solves the problem existing in the prior art that a large message mode CPM message cannot be transmitted to a group, and thus improves the experience of users.

## Claims

1. A method for sending a large message mode converged IP messaging, CPM, message to a group, wherein the method is used for a sender CPM client to send the large message mode CPM message to a target group, comprising:
sending a session invitation message of the large message mode CPM message by the sender CPM client (101), and after receiving the session invitation message, sending the session invitation message to each receiver address in the group by a CPM controlling function entity (103);
receiving the session invitation message and carrying out a media negotiation with the CPM controlling function entity by a receiver CPM client, and carrying out a media negotiation with the sender CPM client to determine a media transmission link between the sender CPM client and the receiver CPM client by the controlling function entity (105); and/or
receiving the session invitation message and carrying out a media negotiation with the controlling function entity by an inter-working function entity, and carrying out a media negotiation with the sender CPM client to determine a media transmission link between the sender CPM client and the controlling function entity by the controlling function entity (105);
sending the content of the large message mode CPM message to the receiver CPM client and/or the inter-working function entity via the media transmission link by the sender CPM client (106);
and initiating a flow to end the session of the large message mode CPM message by the sender CPM client, the controlling function entity, the receiver CPM client or the inter-working function entity (107);
wherein the method further comprises: when receiving the session invitation message, obtaining, by the CPM controlling function entity, a receiver address according to a group member list carried in the message body of the session invitation message if the receiver is a temporary group, or obtaining, by the CPM controlling function entity, a receiver address from a document server if the receiver is pre-defined group.

2. A system for sending a large message mode converged IP messaging, CPM, message to a group, wherein the system is used for sending the large message mode CPM message to a target group, **characterized by**, comprising: a sender CPM client (1), a receiver CPM client (5), a CPM controlling function entity (3), an source terminal participating function entity (2) and a target terminal participating function entity (4), wherein
the sender CPM client (1) is configured to send a session invitation message of the large message mode CPM message carrying session description parameters of session description protocol, SDP, for a negotiation, to receive a success response message SIP 200 OK of the session invitation message, to establish a media transmission link, and to send a media transmission request MSRP SEND via the established media transmission link;
the source terminal participating function entity (2), that is, the participating function entity to which the sender belongs, is configured to receive and to send the session invitation message, to receive and to send the success response message SIP 200 OK, to establish a media transmission link, to receive the media transmission request MSRP SEND, and to send the media transmission request to a neighboring MSRP relay node;
the CPM controlling function entity (3) is configured to receive the session invitation message and to send the received session invitation message to each receiver address in the group, to receive and to send the success response message SIP 200 OK of the session invitation message, to establish a media transmission link, and to send the request MSRP SEND to each receiver address via the established media transmission link after receiving the request MSRP SEND;
the target terminal participating function entity (4), that is, the participating function entity to which the receiver belongs, is configured to receive and to send the session invitation message, to receive and to send the success response message SIP 200 OK of the session invitation message, to establish a media transmission link, to receive the media transmission request MSRP SEND, and to send the media transmission request to a neighboring MSRP relay node;
and the receiver CPM client (5) is configured to receive the session invitation message, to create and to make a response to the success response message SIP 200 OK of the session invitation message, to establish a media transmission link, and to receive the media transmission request MSRP SEND;
wherein the CPM controlling function entity is further configured to, when receiving the session invitation message, obtain a receiver address according to a group member list carried in the message body of the session invitation message if the receiver is a temporary group, or obtain a receiver address from a document server if the receiver is pre-defined group.

3. The system according to claim 2, **characterized in that** when receiving the session invitation message, the CPM controlling function entity (3) acts as a conference center temporarily.

4. The system according to claim 2, **characterized in that** the receiver address refers to a CPM system receiver address, CPM Address, or a non-CPM system receiver address, non-CPM Address.

5. The system according to claim 2, **characterized in that** when receiving the session invitation message, the CPM controlling function entity (3) acts as a back-to-back user agent, B2BUA.

6. The system according to claim 2, **characterized in that** after receiving the response message SIP 200 OK, the CPM controlling function entity (3) adds a characteristic parameter 'isfocus' in the response 200 OK.

7. The system according to claim 2, **characterized in that** after receiving the response message SIP 200 OK, the CPM controlling function entity (3) sends a final acknowledgement message SIP ACK.

8. The system according to claim 2, **characterized in that** after receiving the SIP ACK, the CPM controlling function entity (3) determines a link to a neighboring node hop according to the information provided by the SDP.

9. The system according to claim 2, **characterized in that** the sender CPM client (1) is further configured to send a request BYE, and after receiving the request BYE sent by the sender, the CPM controlling function entity (3) sends the request BYE to each receiver address in the target group.

## Patentansprüche

1. Verfahren zum Senden einer konvergierten IP-Messaging-, CPM, Großnachrichtenmodus-Nachricht an eine Gruppe, wobei das Verfahren für einen CPM-Sender-Client verwendet wird, um die CPM-Großnachrichtenmodus-Nachricht an eine Zielgruppe zu senden, umfassend:
Senden einer Sitzungseinladungsnachricht der CPM-Großnachrichtenmodus-Nachricht durch den CPM-Sender-Client (101), und nach Empfangen der Sitzungseinladungsnachricht Senden der Sitzungseinladungsnachricht durch eine steuernde CPM-Funktionseinheit an jede Empfängeradresse in der Gruppe (103);
Empfangen der Sitzungseinladungsnachricht und Durchführen einer Medienverhandlung mit der steuernden CPM-Funktionseinheit durch einen CPM-Empfänger-Client, und Durchführen einer Medienverhandlung mit dem CPM-Sender-Client durch die steuernde Funktionseinheit, um eine Medienübertragungsverbindung zwischen dem CPM-Sender-Client und dem CPM-Empfänger-Client zu bestimmen (105); und/oder
Empfangen der Sitzungseinladungsnachricht und Durchführen einer Medienverhandlung mit der steuernden Funktionseinheit durch eine zwischenagierende Funktionseinheit, und Durchführen einer Medienverhandlung mit dem CPM-Sender-Client durch die steuernde Funktionseinheit, um eine Medienübertragungsverbindung zwischen dem CPM-Sender-Client und der steuernden Funktionseinheit zu bestimmen (105);
Senden des Inhalts der CPM-Großnachrichtenmodus-Nachricht an den CPM-Empfänger-Client und/oder die zwischenagierende Funktionseinheit durch den CPM-Sender-Client über die Medienübertragungsverbindung (106);
und Initiieren eines Stroms, um die Sitzung der CPM-Großnachrichtenmodus-Nachricht durch den CPM-Sender-Client, die steuernde Funktionseinheit, den CPM-Empfänger-Client oder die zwischenagierende Funktionseinheit zu beenden (107);
wobei das Verfahren weiter umfasst: bei Empfangen der Sitzungseinladungsnachricht, Erhalten, durch die steuernde CPM-Funktionseinheit, einer Empfängeradresse gemäß einer Gruppenmitgliederliste, die im Nachrichtentext der Sitzungseinladungsnachricht übermittelt wird, wenn der Empfänger eine temporäre Gruppe ist, oder Erhalten, durch die steuernde CPM-Funktionseinheit, einer Empfängeradresse von einem Dokumentenserver, wenn der Empfänger eine vordefinierte Gruppe ist.

2. System zum Senden einer konvergierten IP-Messaging-, CPM, Großnachrichtenmodus-Nachricht an eine Gruppe, wobei das System zum Senden der CPM-Großnachrichtenmodus-Nachricht an eine Zielgruppe verwendet wird, **dadurch gekennzeichnet, dass** es umfasst: einen CPM-Sender-Client (1), einen CPM-Empfänger-Client (5), eine steuernde CPM-Funktionseinheit (3), eine teilnehmende Quellenendgerät-Funktionseinheit (2) und eine teilnehmende Zielendgerät-Funktionseinheit (4), wobei
der CPM-Sender-Client (1) dazu konfiguriert ist, eine Sitzungseinladungsnachricht der CPM-Großnachrichtenmodus-Nachricht zu senden, welche Sitzungsbeschreibungsprotokoll-, SDP, Sitzungsbeschreibungsparameter für eine Verhandlung übermittelt, eine Erfolgsantwortnachricht SIP 200 OK der Sitzungseinladungsnachricht zu empfangen, eine Medienübertragungsverbindung aufzubauen, und eine Medienübertragungsanfrage MSRP SEND über die aufgebaute Medienübertragungsverbindung zu senden;
die teilnehmende Quellenendgerät-Funktionseinheit (2), das heißt die teilnehmende Funktionseinheit, zu der der Sender gehört, dazu konfiguriert ist, die Sitzungseinladungsnachricht zu empfangen und zu senden, die Erfolgsantwortnachricht SIP 200 OK zu empfangen und zu senden, eine Medienübertragungsverbindung aufzubauen, die Medienübertragungsanfrage MSRP SEND zu empfangen, und die Medienübertragungsanfrage an einen benachbarten MSRP-Weiterleitungsknoten zu senden;
die steuernde CPM-Funktionseinheit (3) dazu konfiguriert ist, die Sitzungseinladungsnachricht zu empfangen und die empfangene Sitzungseinladungsnachricht an jede Empfängeradresse in der Gruppe zu senden, die Erfolgsantwortnachricht SIP 200 OK der Sitzungseinladungsnachricht zu empfangen und zu senden, eine Medienübertragungsverbindung aufzubauen, und nach Empfangen der Anfrage MSRP SEND die Anfrage MSRP SEND über die aufgebaute Medienübertragungsverbindung an jede Empfängeradresse zu senden;
die teilnehmende Zielendgerät-Funktionseinheit (4), das heißt die teilnehmende Funktionseinheit, zu der der Empfänger gehört, dazu konfiguriert ist, die Sitzungseinladungsnachricht zu empfangen und zu senden, die Erfolgsantwortnachricht SIP 200 OK der Sitzungseinladungsnachricht zu empfangen und zu senden, eine Medienübertragungsverbindung aufzubauen, die Medienübertragungsanfrage MSRP SEND zu empfangen, und die Medienübertragungsanfrage an einen benachbarten MSRP-Weiterleitungsknoten zu senden;
und der CPM-Empfänger-Client (5) dazu konfiguriert ist, die Sitzungseinladungsnachricht zu empfangen, eine Antwort auf die Erfolgsantwortnachricht SIP 200 OK der Sitzungseinladungsnachricht zu erzeugen und zu geben, eine Medienübertragungsverbindung aufzubauen, und die Medienübertragungsanfrage MSRP SEND zu empfangen;
wobei die steuernde CPM-Funktionseinheit weiter dazu konfiguriert ist, bei Empfangen der Sitzungseinladungsnachricht eine Empfängeradresse gemäß einer Gruppenmitgliederliste zu erhalten, die im Nachrichtentext der Sitzungseinladungsnachricht übermittelt wird, wenn der Empfänger eine temporäre Gruppe ist, oder eine Empfängeradresse von einem Dokumentenserver zu erhalten, wenn der Empfänger eine vordefinierte Gruppe ist.

3. System nach Anspruch 2, **dadurch gekennzeichnet, dass** die steuernde CPM-Funktionseinheit (3) bei Empfangen der Sitzungseinladungsnachricht temporär als ein Konferenzzentrum fungiert.

4. System nach Anspruch 2, **dadurch gekennzeichnet, dass** die Empfängeradresse auf eine CPM-Systemempfängeradresse, CPM-Adresse, oder eine Nicht-CPM-Systemempfängeradresse, Nicht-CPM-Adresse, verweist.

5. System nach Anspruch 2, **dadurch gekennzeichnet, dass** die steuernde CPM-Funktionseinheit (3) bei Empfangen der Sitzungseinladungsnachricht als ein Back-to-Back User Agent, B2BUA, fungiert.

6. System nach Anspruch 2, **dadurch gekennzeichnet, dass** die steuernde CPM-Funktionseinheit (3) nach Empfangen der Antwortnachricht SIP 200 OK einen charakteristischen Parameter "isfocus" in die Antwort 200 OK hinzufügt.

7. System nach Anspruch 2, **dadurch gekennzeichnet, dass** die steuernde CPM-Funktionseinheit (3) nach Empfangen der Antwortnachricht SIP 200 OK eine abschließende Bestätigungsnachricht SIP ACK sendet.

8. System nach Anspruch 2, **dadurch gekennzeichnet, dass** die steuernde CPM-Funktionseinheit (3) nach Empfangen der SIP ACK eine Verbindung zu einem benachbarten Knotensprung gemäß den vom SDP bereitgestellten Informationen bestimmt.

9. System nach Anspruch 2, **dadurch gekennzeichnet, dass** der CPM-Sender-Client (1) weiter dazu konfiguriert ist, eine Anfrage BYE zu senden, und die steuernde CPM-Funktionseinheit (3) nach Empfangen der vom Sender gesendeten Anfrage BYE die Anfrage BYE an jede Empfängeradresse in der Zielgruppe sendet.

## Revendications

1. Procédé pour envoyer un long message de messagerie convergente sur IP, CPM, en mode message à un groupe, dans lequel le procédé est utilisé pour un client émetteur CPM pour envoyer le long message CPM en mode message à un groupe cible, comprenant :
l'envoi d'un message d'invitation de session du long message CPM en mode message par le client émetteur CPM (101), et après la réception du message d'invitation de session, l'envoi du message d'invitation de session à chaque adresse de récepteur dans le groupe par une entité fonctionnelle de commande CPM (103) ;
la réception du message d'invitation de session et l'exécution d'une négociation de média avec l'entité fonctionnelle de commande CPM par un client récepteur CPM, et l'exécution d'une négociation de média avec le client émetteur CPM pour déterminer une liaison de transmission de média entre le client émetteur CPM et le client récepteur CPM par l'entité fonctionnelle de commande (105) ; et/ou
la réception du message d'invitation de session et l'exécution d'une négociation de média avec l'entité fonctionnelle de commande par une entité fonctionnelle d'interfonctionnement, et l'exécution d'une négociation de média avec le client émetteur CPM pour déterminer une liaison de transmission de média entre le client émetteur CPM et l'entité fonctionnelle de commande par l'entité fonctionnelle de commande (105) ;
l'envoi du contenu du long message CPM en mode message au client récepteur CPM et/ou à l'entité fonctionnelle d'interfonctionnement via la liaison de transmission de média par le client émetteur CPM (106) ;
et le lancement d'un flux pour terminer la session du long message CPM en mode message par le client émetteur CPM, l'entité fonctionnelle de commande, le client récepteur CPM ou l'entité fonctionnelle d'interfonctionnement (107) ;
dans lequel le procédé comprend en outre : lors de la réception du message d'invitation de session, l'obtention, par l'entité fonctionnelle de commande CPM, d'une adresse de récepteur selon une liste de membres de groupe transportée dans le corps de message du message d'invitation de session si le récepteur est un groupe temporaire, ou l'obtention, par l'entité fonctionnelle de commande CPM, d'une adresse de récepteur depuis un serveur de documents si le récepteur est un groupe prédéfini.

2. Système pour envoyer un long message de messagerie convergente sur IP, CPM, en mode message à un groupe, dans lequel le système est utilisé pour envoyer le long message CPM en mode message à un groupe cible, **caractérisé en ce qu'**il comprend : un client émetteur CPM (1), un client récepteur CPM (5), une entité fonctionnelle de commande CPM (3), une entité fonctionnelle participante de terminal source (2) et une entité fonctionnelle participante de terminal cible (4), dans lequel
le client émetteur CPM (1) est configuré pour envoyer un message d'invitation de session du long message CPM en mode message transportant des paramètres de description de session de protocole de description de session, SDP, pour une négociation, pour recevoir un message de réponse de succès SIP 200 OK du message d'invitation de session, pour établir une liaison de transmission de média, et pour envoyer une demande de transmission multimédia MSRP SEND via la liaison de transmission de média établie ;
l'entité fonctionnelle participante de terminal source (2), c'est-à-dire, l'entité fonctionnelle participante à laquelle l'émetteur appartient, est configurée pour recevoir et pour envoyer le message d'invitation de session, pour recevoir et envoyer le message de réponse de succès SIP 200 OK, pour établir une liaison de transmission de média, pour recevoir une demande de transmission multimédia MSRP SEND et pour envoyer la demande de transmission multimédia à un noeud relais MSRP voisin ;
l'entité fonctionnelle de commande CPM (3) est configurée pour recevoir le message d'invitation de session et pour envoyer le message d'invitation de session reçu à chaque adresse de récepteur dans le groupe, pour recevoir et pour envoyer le message de réponse de succès SIP 200 OK du message d'invitation de session, pour établir une liaison de transmission de média, et pour envoyer la demande MSRP SEND à chaque adresse de récepteur via la liaison de transmission de média établie après la réception de la demande MSRP SEND ;
l'entité fonctionnelle participante de terminal cible (4), c'est-à-dire, l'entité fonctionnelle participante à laquelle le récepteur appartient, est configurée pour recevoir et pour envoyer le message d'invitation de session, pour recevoir et pour envoyer le message de réponse de succès SIP 200 OK du message d'invitation de session, pour établir une liaison de transmission de média, pour recevoir la demande de transmission multimédia MSRP SEND, et pour envoyer la demande de transmission multimédia à un noeud de relais MSRP voisin ;
et le client récepteur CPM (5) est configuré pour recevoir le message d'invitation de session, pour créer et pour faire une réponse au message de réponse de succès SIP 200 OK du message d'invitation de session, pour établir une liaison de transmission de média, et pour recevoir la demande de transmission multimédia MSRP SEND ;
dans lequel l'entité fonctionnelle de commande CPM est configurée en outre pour, lors de la réception du message d'invitation de session, obtenir une adresse de récepteur selon une liste de membres de groupe transportée dans le corps de message du message d'invitation de session si le récepteur est un groupe temporaire, ou obtenir une adresse de récepteur depuis un serveur de documents si le récepteur est un groupe prédéfini.

3. Système selon la revendication 2, **caractérisé en ce que**, lors de la réception du message d'invitation de session, l'entité fonctionnelle de commande CPM (3) agit temporairement en tant que centre de conférences.

4. Système selon la revendication 2, **caractérisé en ce que** l'adresse de récepteur se rapporte à une adresse de récepteur de système CPM, Adresse CPM, ou à une adresse de récepteur d'un système non CPM, Adresse non-CPM.

5. Système selon la revendication 2, **caractérisé en ce que**, lors de la réception du message d'invitation de session, l'entité fonctionnelle de commande CPM (3) agit en tant qu'agent d'utilisateur face à face, B2BUA.

6. Système selon la revendication 2, **caractérisé en ce que**, après la réception du message de réponse SIP 200 OK, l'entité fonctionnelle de commande CPM (3) ajoute un paramètre caractéristique « isfocus » dans la réponse 200 OK.

7. Système selon la revendication 2, **caractérisé en ce que**, après la réception du message de réponse SIP 200 OK, l'entité fonctionnelle de commande CPM (3) envoie un message d'acquittement final, SIP ACK.

8. Système selon la revendication 2, **caractérisé en ce que**, après la réception du SIP ACK, l'entité fonctionnelle de commande CPM (3) détermine une liaison vers un saut de noeud voisin selon les informations fournies par le SDP.

9. Système selon la revendication 2, **caractérisé en ce que** le client émetteur CPM (1) est configuré en outre pour envoyer une demande BYE, et après la réception de la demande BYE envoyée par l'émetteur, l'entité fonctionnelle de commande CPM (3) envoie la demande BYE à chaque adresse de récepteur dans le groupe cible.
